# EUROPEAN PATENT APPLICATION

(11) **EP 4 219 361 A1**
(43) Date of publication of application: **02.08.2023**
(21) Application number: 23152051.1
(22) Date of filing: 17.01.2023
(51) Int. Cl.: B65G 63/00, G06Q 10/08, G06Q 10/0835

(54) **SYSTEM FOR LOADING AND UNLOADING AND TRANSPORTING CONTAINERS IN A PORT AREA**

(30) Priority: 26.01.2022 BE 202205051
(71) Applicant: Denys NV, 9032 Gent (BE)
(72) Inventor: VAN WASSENHOVE, Johan Marcel Maurice, 9840 De pinte (BE)
(74) Representative: Jacobs, Tinneke Ivonne C

(57) **Abstract**

System for loading and unloading and transporting containers (18) in a port area whereby aboveground terminals (6) are provided for loading and unloading container vessels (5,25) and container vehicles (26). The aboveground terminals (6) are interconnected by an underground closed circuit (16) in the form of a loop on which autonomous electric vehicles (A-EVs) (19) provided with a loading platform (19') for containers (18) circulate at a constant speed. The underground circuit (16) is further provided with entrances and exits (17) up to the aboveground terminals (6) for loading and unloading containers (18) at the aboveground terminals (6).

## Description

This invention relates to a system for loading and unloading and transporting containers in a port area, whereby, more specifically, part of the transport occurs underground.

For example, the system is useful for underground container transport within a port or for the underground transport of consumer goods from a central warehouse to various distribution centres.

The existing transport systems that use the public highway are subject to traffic jams and require a large amount of energy per transported volume.

Furthermore, for the transport in the ports, account needs to be taken of mobility problems within a port area with, for example, obstacles such as drawbridges, locks and the like and inherent waiting periods at locks and at terminals for picking up and dropping off containers for inland shipping and for road transport at the terminals.

Furthermore, usually there is little available space for expansion of the terminals, docks and the like and port area expansion is typically a rather sensitive matter from a social point of view.

From BE 1.017.692 a device of the same inventor is already known for transporting goods that uses underground loading and unloading stations which are interconnected by an underground circuit with transport vehicles which are continuously propelled at a constant circulation speed on the circuit.

In this known device of BE 1.017.692, a side track is provided on the level of every loading and unloading station next to the circuit for a transshipment platform for transshipping the goods from a transport vehicle of the circuit onto the transshipment platform or vice versa, whereby for transshipping the transshipment platform is moved next to the relevant transport vehicle at the same speed as the transport vehicle.

On the level of each loading and unloading station, the device of BE 1.017.692 is further provided with a lift for transporting the goods between the underground loading and unloading stations and aboveground loading and unloading stations for loading and unloading vessels and/or freight transport by road or rail and or intermediary temporary storage locations.

A disadvantage of such known device is that special intermediary transshipment platforms are needed to load and unload the goods on and off the transport vehicles and that for every station a relatively long underground side track needs to be provided for said transshipment platforms.

Furthermore, the transport between underground and aboveground with lifts is expensive and time-consuming.

The purpose of the present invention is to provide a solution to one or more of the aforementioned and other disadvantages.

To this end, the invention relates to a system for loading and unloading and transporting containers in a port area, whereby the device is provided with aboveground terminals for loading and unloading container vessels and container vehicles, whereby the terminals are interconnected by an underground closed loop circuit on which autonomous electric vehicles (A-EV) circulate at a constant speed and which are provided with a loading platform for a container and whereby the underground circuit is provided with entrances and exits for the connection with the aboveground terminals.

The combination of an underground circuit that interconnects the terminals and A-EVs ensuring the transport of the containers in and around the port area via the circuit, allows port logistics to be optimised with easy access to the hinterland and extra storage capacity to be created with a flexible, ecological and future-oriented solution for efficient port logistics.

An advantage of the underground circuit is that the transport of the containers by means of the A-EVs does not have to contend with the obstacles of classic port transport. Furthermore, the circuit ensures the shortest connection between terminals as the route of the circuit does not have to take into account any obstacles such as waterways, docks, locks and the like as the circuit can be built underneath.

Preferably, at least one terminal of the system is provided with a fully automatic stacking system with individual stackable compartments for the containers that can be individually placed in and removed from the stacking system for loading and unloading.

In such fully automatic stacking system, the containers are stacked one on top of the other in a kind of big stacking rack with several levels of individually accessible stackable compartments for containers, whereby this system gives individualised access to the stacked containers without it being necessary to first move containers to, for example, be able to move a lower container as is the case in classic storage with the containers resting on each other.

This offers the advantage that waiting periods can be avoided to be able to load and unload a specific container.

Another advantage is that this means valuable stacking space is saved with a minimum footprint whereby the required storage space is reduced down to 1/3.

The autonomous electric vehicles circulate in the underground circuit with a speed of, for example, 50 km/h, with which a transport capacity of, for example, 20,000 containers every 24 hours can be achieved. They are autonomously, in other words individually and independently of each other, deployable and in this way can be sent via the entrances and exits to any terminal for loading or unloading any specific container if so required. Thus, a specific container can be transported on demand to a desired terminal of destination via the underground circuit.

The A-EVs can leave or join the circuit at the entrances and exits without interfering with the traffic on the circuit.

The underground transport also means reduced freight traffic in and around the port area, whereby the classic internal aboveground rail traffic of the port area can, for example, be taken over by the underground transport system according to the invention.

For a smooth connection with the hinterland one or more terminals can, for example, be arranged as a connecting hub chosen at a location near different transport routes such as motorways, waterways for inland shipping, railways, and the like.

For example, in this way it is possible to ensure that all inland vessels are unloaded and loaded on the level of a terminal at a dock near such connecting hub, whereby the terminals for loading and unloading sea-going vessels are used exclusively for this purpose, such that said terminals are relieved from the transport and storage of containers for inland shipping, such that more storage capacity for sea containers is also available in said terminals.

Furthermore, this means waiting periods for inland shipping are avoided at locks and for sea-going vessels at terminals, whereby the preference is that on the level of the terminal a fully automatic stacking system is provided for loading and unloading the inland vessels.

Next to the one or more fully automatic stacking systems, traditional storage systems for containers can also be provided along the circuit for the connection with other terminals via the A-EVs of the circuit and provided with a classic loading and unloading system for containers.

In this way also an existing infrastructure can be integrated in the circuit, which in the long term can be replaced, if relevant, with a fully automatic stacking system, such that the works for the construction and the associated investments can be phased.

Alternatively, in places where there is insufficient space for an entrance and exit for a terminal, a lift can be provided for lifting and lowering the A-EVs between the underground circuit and the aboveground terminal.

Consequently, the stacking capacity on the level of the relevant dock can be doubled and both sides of the dock are easily and quickly accessible for transporting the containers.

With the intention of better showing the characteristics of the invention, a preferred embodiment of a system according to the invention for loading and unloading and transporting containers in a port area is described hereinafter, by way of an example without any limiting nature, with reference to the accompanying drawings wherein:
figure 1 schematically shows the ground plan by way of example of the port area of Antwerp with the route of the underground circuit of the system according to the invention indicated thereon;
figure 2 shows a presentation of the underground circuit;
figure 3 shows a terminal indicated with arrow F3 in figure 1 on the level of the Deurganckdok along the river Scheldt for loading and unloading sea-going vessels, whereby the terminal is equipped with a fully automatic stacking system for containers;

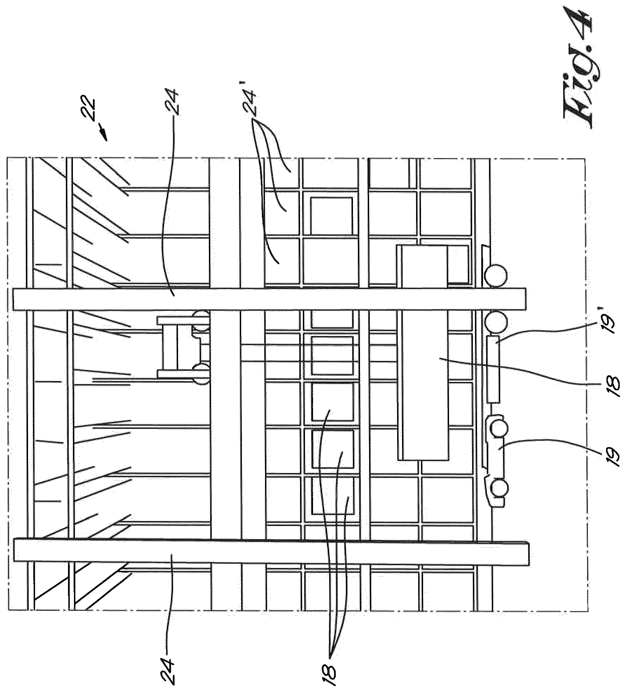

figure 4 shows a view of the fully automatic stacking system according to arrow F4 in figure 3;
figure 5 shows a view of the Noordzeeterminal indicated with arrow F5 in figure 1, provided with a classic device for loading and unloading sea-going vessels and the traditional storage of containers along the quay;
figure 6 shows a view of the situation of the Bevrijdingsdok indicated with arrow F6 on figure 1 provided with a device for loading and unloading containers on inland vessels and the storage in a fully automatic stacking system;
figure 7 shows a vertical section on the level of the Europaterminal showing the underground circuit and a lift to be able to lift the A-EVs from the circuit and move them between the underground circuit and the aboveground terminal.

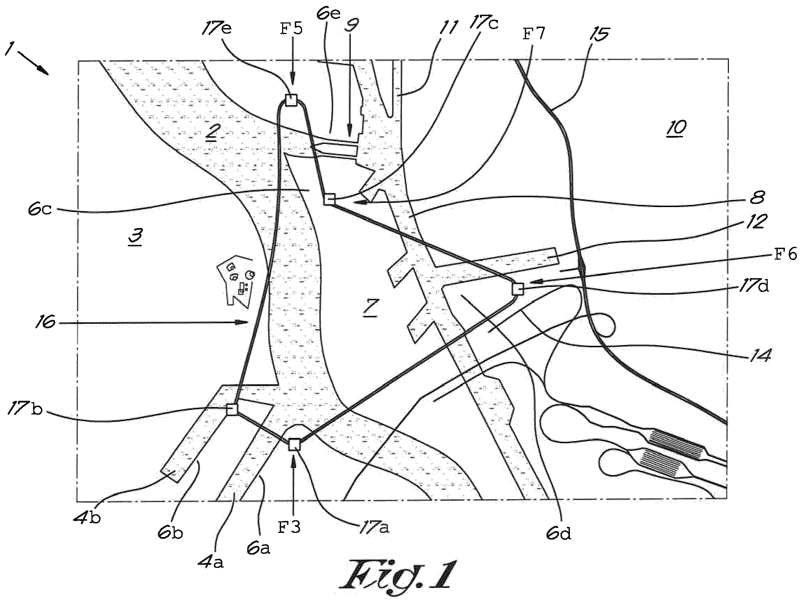

The ground plan of figure 1 shows the port area around the port 1 of Antwerp along the tidal river Scheldt 2 with along the left bank two tidal docks 4, the Deurganckdok 4a and the Tweede Getijdendok 4b respectively, where sea-going container vessels 5 coming from the North Sea can moor directly via the Scheldt 2 without having to pass along a lock for unloading or loading at a terminal 6a and 6b.

The Europaterminal and an inland port 8 are located along the right bank 7 which is accessible from the Scheldt 2 via a lock complex 9 and which is connected with the hinterland 10 via canals or other waterways 11 and the like.

Docks are provided in the inland port 8 such as the Bevrijdingsdok 12 with a terminal 6d for loading and unloading containers of, among others, inland vessels 13.

The Bevrijdingsdok 12 lies on a hub of different strategic connecting roads with the hinterland 10 such as the aforementioned canals 11 for inland shipping, railways 14 and important motorways 15.

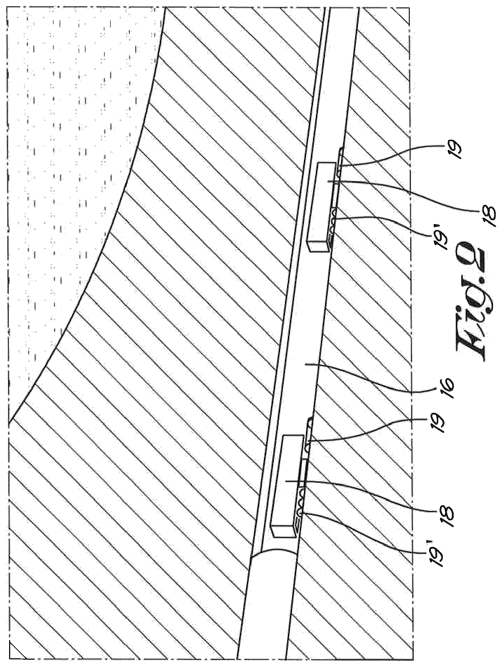

The different terminals 6 are interconnected by an underground tunnel circuit 16 in the form of a looped tunnel as shown in figure 2 with entrances and exits 17 in the form of a ramp on the level of different terminals 6.

For transporting the containers 18 between the different terminals 6, so-called autonomous electric vehicles (A-EV) 19 are deployed which circulate on the circuit 16 at a constant speed and which are provided with a loading platform 19' or trailer for containers, whereby the A-EVs 19 can leave or join the circuit 16 with their load 18 via the aforementioned entrances and exits 17.

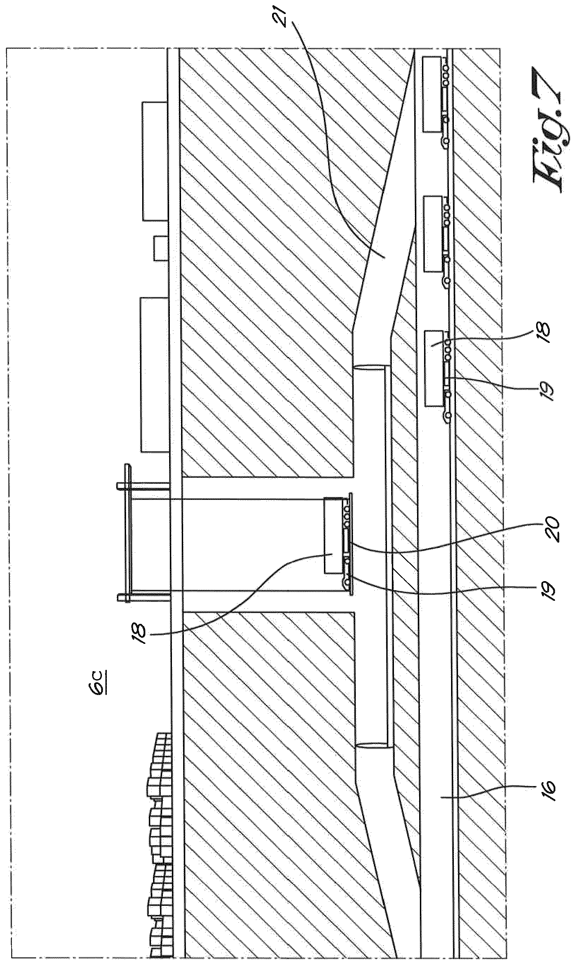

On the level of the Europaterminal 6c, the entrances and exits are replaced by a lift 20 as shown in figure 7 in a branch 21 of the circuit 16 due to a lack of space for the ramps of the entrances and exits.

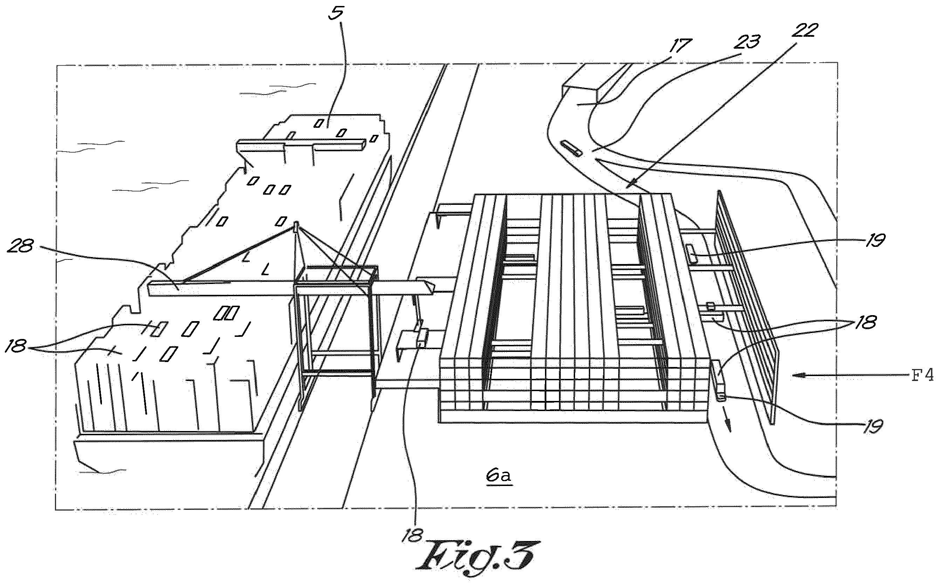

In the example of the figures, the terminals 6a and 6b on the level of the Deurganckdok 4a and the Tweede Getijdendok 4b are provided with a fully automatic stacking system 22 as shown in figure 3 for loading and unloading the sea-going container vessels 5 on one side of the stacking system 22 by means of dock-mounted cranes or the like and for loading and unloading the A-EVs 19 which are guided on the other side of the stacking system 22 via an aboveground branch 23 of the circuit 16 along the stacking system 22.

Between the vessel 5 and the aforementioned branch 23 a kind of big stacking rack 24 is provided with individual stackable compartments 24' for the containers 18 which can be individually placed in and removed from the stacking system 22 fully automatically for loading and unloading the vessel 5 on one side and the individual A-EVs 19 on the other side.

Due to the fact that the containers 18 can be individually placed in and removed from the stacking rack 24, it is no longer necessary to first remove a part of the containers 18 from a stack of containers 18 to, for example, be able to move a middle or a lower container, such that a lot of time and working hours are saved.

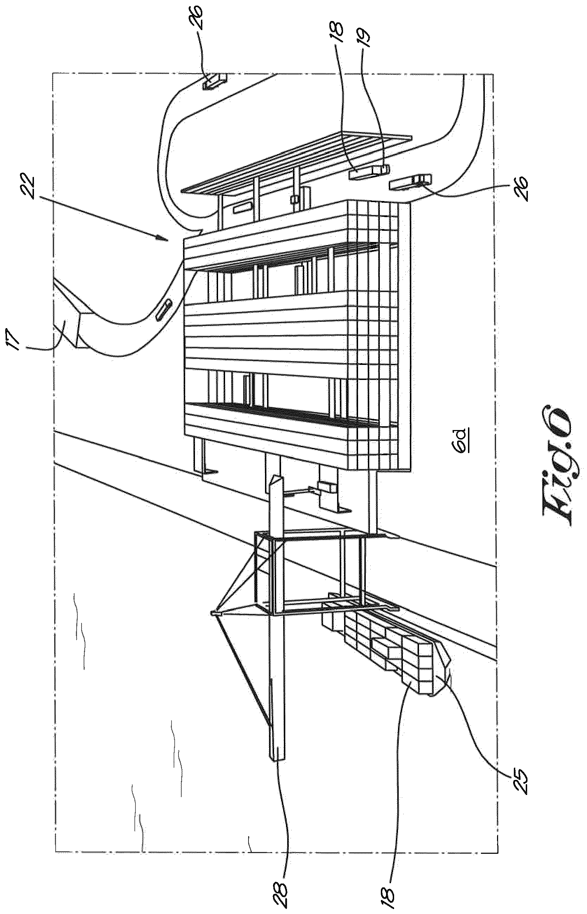

With the stacking system 22 several A-EVs 19 can be unloaded or loaded at the same time and sent to a programmed terminal 6 thanks to a server of the system, for example to the terminal 6d at the Delwaidedok 12 where the containers 18, as shown in figure 6, can be unloaded and transshipped via an analogue fully automatically controlled stacking system 22 to other means of transport for containers 18, such as inland vessels 25, trucks 26, wagons and the like to be distributed to the hinterland 10 from there.

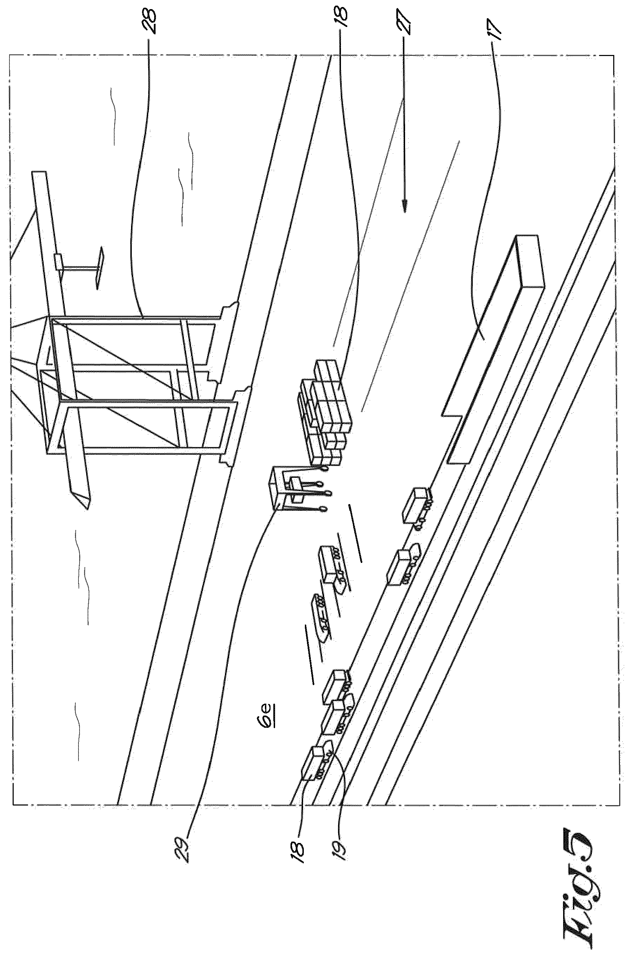

Analogously, containers 18 of said means of transport 25, 26 can be unloaded for loading an inland vessel 25 or for transporting to other terminals 6 with the A-EVs 19 for loading sea-going vessels 5 or for storing the containers 18 in a fully automatic stacking system 22 or at a classic depot 27 for containers 18 such as at the Noordzeeterminal 6e on the right bank 7, where the containers 18, as shown in figure 5, are handled in a traditional way with dock-mounted cranes 28, so-called container handling cranes 29, reachstackers, and the like to put them on and take them off the A-EVs19 and trucks 26.

The entire transport by means of the A-EVs 19 via the circuit 16 and the loading and unloading with the fully automatic stacking systems 22 is controlled from a server with adapted logistics software.

It is understood that in this way very efficient and flexible port logistics are possible with minimum waiting periods for loading and unloading and transporting within the port 1.

It is also clear that the system according to the invention is also applicable in other ports 1 than Antwerp and that every port 1 has its specific layout to which the system needs to be adapted.

Thanks to the underground circuit 16, the terminals 6 can be interconnected via the shortest and quickest route, for example with a straight tunnel underneath the Scheldt 2 or other obstacles.

The fully automatic stacking systems are not strictly necessary for the efficient operation of the system, but, if applied, they do contribute to more efficient port logistics.

The present invention is by no means limited to the embodiment described and shown in the figures, but such system for loading and unloading and transporting containers in a port area, can be realised according to different variants without departing from the scope of the invention.

## Claims

1. System for loading and unloading and transporting containers (18) in a port area, whereby aboveground terminals (6) for loading and unloading container vessels (5,25) and container vehicles (26) are provided, **characterised in that** the aboveground terminals (6) are interconnected by an underground closed circuit (16) in the form of a loop on which autonomous electric vehicles (A-EVs) (19) provided with a loading platform (19') for containers (18) circulate at a constant speed and whereby the underground circuit (16) is provided with entrances and exits (17) along which the A-EVs move up to the aboveground terminals (6) for loading and unloading containers at the aboveground terminals (6).

2. System according to claim 1, **characterised in that** at least one terminal (6) is provided with a fully automatic stacking system (22) with individual stackable compartments (21') for the containers (18) which can be individually placed in and removed from the stacking system (22) for loading and unloading.

3. System according to claim 1 or 2, **characterised in that** one or more of the terminals (6) is arranged as a connecting hub with the hinterland (10), chosen at a location near different transport options such as motorways (15) for road transport, waterways (11) for inland shipping, railways (14), and the like.

4. System according to claim 3, **characterised in that** the terminal (6d) which is arranged as a connecting hub is chosen near a waterway (11) for inland shipping and that the loading and unloading of inland vessels (25) takes place exclusively via said terminal (6d).

5. System according to claim 3, **characterised in that** on the level of the terminal (6d) for loading and unloading the inland vessels (25) a fully automatic stacking system(22) is provided.

6. System according to any one of the previous claims, **characterised in that** next to the one or more fully automatic stacking systems (22), traditional warehouses (27) for containers (18) can also be provided along the circuit (16) for the connection with other terminals (6) via the circuit (16) and provided with a classic loading and unloading system for containers (18).

7. System according to any one of the previous claims, **characterised in that** at locations where insufficient space is available for an entrance and exit (17) for a terminal (6), a lift (20) is provided for moving the A-EVs (19) between the underground circuit (16) and the aboveground terminal (6).

8. System according to any one of the previous claims, **characterised in that** the terminals are interconnected via the shortest route, for example under waterways or other obstacles.
